Europäisches Patentamt

European Patent Office

Office européen des brevets

(11) Publication number: **0 137 732**
A2

(12) **EUROPEAN PATENT APPLICATION**

(21) Application number: **84306181.3**

(22) Date of filing: **10.09.84**

(51) Int. Cl.⁴: **B 05 B 15/04**
B 05 B 7/14, B 05 B 5/02

(30) Priority: **05.10.83 US 539307**

(43) Date of publication of application:
**17.04.85 Bulletin 85/16**

(84) Designated Contracting States:
**BE DE FR GB NL SE**

(71) Applicant: NORDSON CORPORATION
555 Jackson Street P. O. Box 151
Amherst Ohio 44001(US)

(72) Inventor: Mulder, Douglas C.
145 Courtland Street
Wellington Ohio 44090(US)

(74) Representative: Allen, Oliver John Richard et al,
Lloyd Wise, Tregear & Co. Norman House 105-109 Strand
London, WC2R 0AE(GB)

(54) **Feed and recovery system for an electrostatic powder spray apparatus.**

(57) A powder feed and overspray recovery system for an electrostatic powder spray apparatus is disclosed. The feed and overspray recovery system includes a hopper, providing a fluidised bed of powder material. Powder from the fluidised bed is pulled by a pump through a draft tube located in the hopper and directed to one or more electrostatic spray guns. Overspray material is collected and directed by a second pump directly into the hopper without utilising a sieve to remove impurities from the overspray. The draft tube is preferably a two-piece construction with a main body having a fine filter fitting into an extension tube. The extension tube includes a second coarser filter. Should the draft tube become clogged, it can be easily separated from the pump and replaced with a clean draft tube. The extension is separable from the main body to provide a means to easily clean the filters.

Croydon Printing Company Ltd.

The present invention relates to an apparatus for electrostatically coating the surface of articles with dried pulverant materials or powders. More particularly, the invention relates to an improved hopper or feed system and an improved overspray recovery system for supplying filtered pulverant materials or powders to a spray apparatus.

Powder spraying is now a common commercial practice for coating or painting articles without the use of conventional solvents and liquid paint carriers. The powder is applied to the article by entraining very small particles of the powder generally in a size range between 10 and 80 microns within a low pressure air stream and directing that stream from an electrostatic powder spray gun towards the article. A high voltage electrical charge is applied to the powder at the nozzle of the spray gun, which charge then causes the particles to migrate towards and adhere to the grounded objects. Subsequently, the powder coating is heated and fused to the article in an oven.

One characteristic of electrostatic powder spraying is that a very high percentage of the total sprayed powder becomes "overspray" and fails to adhere to the article. This overspray represents such a high percentage of the total quantity of sprayed powder that commercial utilisation of the powder spraying technique dictates that the application equipment incorporate some form of powder recovery system. Conventionally, that recovery system includes a spray booth within which the powder is sprayed onto the articles and a suction system through which all of the overspray is withdrawn from the booth. Such a powder spray system and overspray recovery system is disclosed in United States Patent No. 3,814,002, the disclosure of which is incorporated herein by reference.

Recovery systems typically utilise a sieve to filter both new or make up and recovered overspray powder. In the past, the sieve has been necessary both to remove undesirable impurities such as dust and dirt which collects in the overspray as well as to prevent clumps of the sprayed powder material from being sent to the spray guns. Clumps tend to cause an extremely irregular spray pattern and can ruin the finish of a coated article.

The use of a sieve presents several problems. The first of these is cost. Sieves are extremely expensive. Sieves are also very noisy, adversely affecting the work environment.

Accordingly, it is an object of the present invention to provide an electrostatic powder spray system wherein the sieve is eliminated. Further, it is an object of the present invention to provide such a system wherein dirt and clumps of powder spray material are removed from the feed. Finally, it is an object of the present invention to provide such a system wherein down time and cost is minimised.

These objects and advantages, as well as others, are provided by a powder spray system in accordance with the invention which has a feed hopper which does not utilise a sieve to remove impurities. Instead, powder is sucked from the feed hopper through a draft tube having one or more in-line filters. Preferably, the draft tube is of two-piece construction having two filters, one located in each piece of the draft tube, a coarse filter and a fine filter. The two pieces are separable allowing the draft tube to be easily cleaned. The draft tubes are easily separated from the pump, permitting replacement of the draft tube with minimum down time.

The invention will now be further described by way of example with reference to the accompanying drawings, in which:

Figure 1 is a diagrammatic view of one embodiment of a powder spray system in accordance with the present invention; and

Figure 2 is a cross sectional view of a draft tube for use in the system shown in Figure 1.

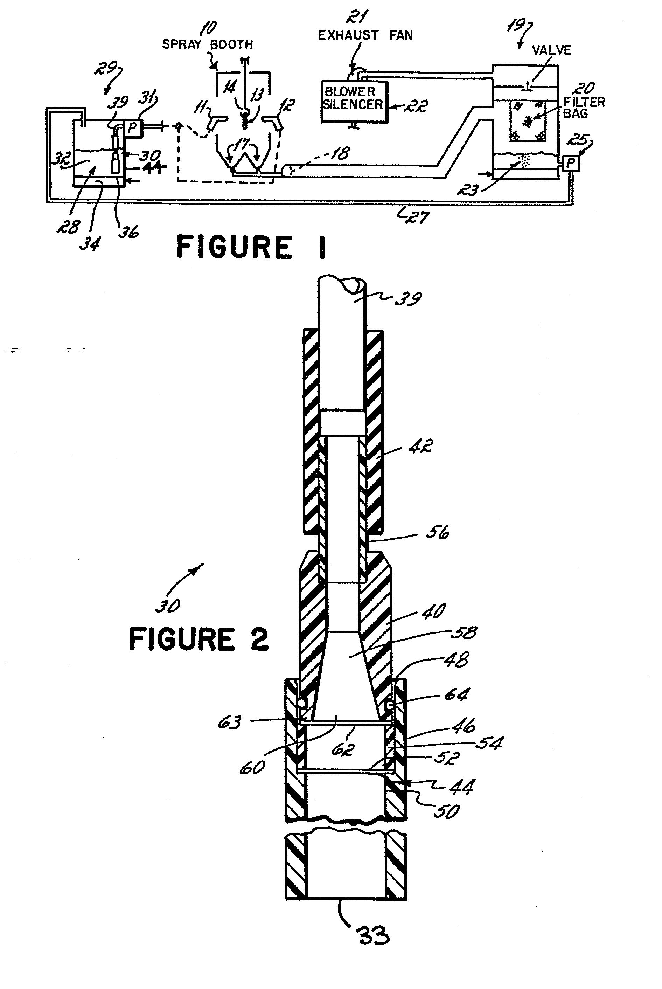

Referring first to Figure 1, there is illustrated a spray booth 10. This booth 10 is conventionally used in an electrostatic powder spray system which includes a powder recovery system for recovering and reconditioning oversprayed powder. Such an electrostatic spray system includes electrostatic spray guns 11 and 12 from which air entrained powder is ejected towards an object or article 13 suspended in the booth from conveyorised hooks 14. As the powder, which normally has a particle size range between 10 and 80 microns is ejected from guns 11 and 12, a high voltage charge is applied to the powder particles so as to cause them to migrate and attach to the grounded object 13. Subsequently, the powder coated object 13 is conveyed from the booth to an oven (not shown) where the object is heated so as to cause the powder particles to be fused onto the object 13.

One characteristic of electrostatic powder spray system is that a high percentage of the particles ejected from the guns 11 and 12 do not migrate onto the objects 13. Instead, this powder becomes overspray which is withdrawn by suction from the booth through conduits 17 into a suction manifold 18 and subsequently into the recovery system.

The powder recovery system includes a conventional recovery unit 19 in which the air withdrawn from the booth 10 is caused to pass through filter bags 20 into exhaust fans 21 and subsequently to the atmosphere through a blower silencer 22. In the course of passing through the filter bags, the previously air-entrained powder drops to the bottom of the powder recovery unit 19 where it is fluidised in a conventional fluidising bed 23. From the fluidising bed 23, the powder is moved by a pump 25 through a conduit 27 to feed hopper 29 having a second fluidised bed 28. From this last fluidising bed 28, powder is drawn through a draft tube 30 by a pump 31 back to the spray guns 11 and 12.

The fluidised bed 28 of feed hopper 29 includes a fluidised bed portion 32 and an air chamber 34 separated from each other by a foraminated plate 36.

The fluidised bed is provided by air forced by a pump (not shown) into the air chamber 34 through foraminated plate 36 into the fluidised bed portion 32. Such systems are known and one is disclosed, for example, in United States Patent No. 3,870,375, the disclosure of which is incorporated herein by reference.

The draft tube 30 extends from an angled inlet tube 39 of pump 31 into the fluidised bed portion 32. As may best be seen in Figure 2, draft tube 30 includes a main body 40 which is connected by a piece of flexible rubber hose 42 with inlet tube 39 of pump 31. The draft tube 30 further includes an extension tube 44 which extends from the main body down into the fluidised bed portion 32 at open end 33.

The extension is a PVC tube having an upper section 46 with an enlarged axial bore 48 extending down to a stepped portion 50 providing an annular seat for a coarse filter or coarse mesh screen 52. Coarse filter 52 is held in position by an annular spacer 54 which is glued or cemented into the enlarged portion 48 of the extension tube 44.

The main body 40 is a hollow PVC tube attached to hose 42 at a tubular portion 56. Tubular portion 56 extends into the main body and communicates with a tapered axial bore 58 extending to an inlet opening 60 of the main body 40. A fine filter or fine mesh screen 62 is glued to the main body 40 covering opening 60.

The outer dimension of the main body 40 is adapted to fit within the larger axial bore 48 of the extension 44. The main body 40 is attached to the extension 44 by manually forcing it downward into this larger axial bore 48 until screen 62 contacts spacer 54. An O-ring 64 positioned in an annular groove in the main body 40 provides a tight seal between the main body 40 and the extension 44.

Since only the O-ring 64 maintains the extension connected to the main body, the extension can be manually separated from the main body to permit cleaning of either the coarse filter 52 or the fine filter 67.

The coarse filter 52 in the extension 44 can, for example, be a 10.7 mesh polyester screen. The finer filter 62 can typically be a finer mesh screen varying in size, for example, from a 23.5 mesh to 10.7 mesh screen as desired in the particular use.

In use, powdered spray material in fluidised bed portion 32 is sucked through draft tube 30 by pump 31. The air-entrained powder is pulled first through extension 44 and its coarse filter 52, and subsequently through main body 40 with its finer filter 62. Pump 31 directs the spray material to guns 11 and 12 which apply an electrostatic charge to the powder and direct it towards articles 13. Overspray material is recovered through conduit 17 and is directed to a recovery unit 19. Pump 25 then directs this recovered overspray material through line 27 back into the feed hopper 29 where it becomes part of the fluidised portion 32. If additional material is required, it can be added at the recovery unit 19.

Since the material is directed back from the recovery unit 19 directly to the feed hopper 29 without passing through a sieve or other type of filter, the fluidised portion 32 may include both clumps of powder coating material and dirt and other unwanted particles. These particles and clumps are filtered by the in-line filters in draft tube 30. Tube 30 can be manually separated from pump 31 by pulling rubber tube 42 from angled inlet tube 39. Impurities entrapped between the fine filter 62 and coarse filter 52 can be easily removed when the main body is separated from the extension tube.

A replacement draft tube can then be attached to the pump 31 while the clogged draft tube is being cleaned. Thus, the operation can continue without shutdown. This method provides quick, easy means to replace the filter and eliminates the need for a sieve at the feed hopper 29. These in-line filters 52 and 62 provide a quick, simple means to replace a clogged filter, requiring substantially less time to replace than a clogged sieve. The draft tubes are so inexpensive that several replacement draft tubes can be stocked to permit replacing a clogged tube with a clean tube. This minimises cost and down time.

CLAIMS:

1.       A feed hopper for an electrostatic powder spray apparatus comprising means to provide a fluidised bed of powder coating material; a draft tube; means to draw fluidised powder from the fluidised bed through the draft tube disposed within the hopper; and means to direct said powder to a spray apparatus; the said draft tube including an in-line filter.

2.       Electrostatic powder spray apparatus having a feed hopper as claimed in Claim 1 wherein the draft tube includes a main body and an extension separable from the main body; the main body including a fine powder filter means and the extension including a coarse powder filter means; the main body being in fluid communication with the means to draw fluidised powder; and at least a portion of the extension being dispensed with said fluidised bed; whereby powder is drawn through said draft tube and said filters, thereby filtering said remaining clumps of powder and impurities from said powder.

3.       Apparatus as claimed in Claim 2 wherein the fine filter means is maintained spaced from the coarse filter means.

4.       An apparatus as claimed in any preceding claim including means to collect overspray powder and return the overspray powder to the hopper without filtering the overspray powder prior to returning the powder to the hopper; and the draft tube extending into the hopper, one end of the tube being in fluid communication with the means to convey the powder, the tube including an in-line filter whereby the in-line filter removes impurities from powder being conveyed to the spray apparatus.

5.    A method of recovering and reusing powder coating material used in an electrostatic powder spray apparatus, said appratus including one or more electrostatic spray guns, means to collect oversprayed powder coating material and a powder hopper providing a fluidised bed of said powder coating material, said method comprising: directing collected overspray powder coating material directly from said apparatus to said hopper without passing said collected oversprayed powder through a sieve or other filter; drawing powder from said fluidised bed in said hopper through a draft tube and directing said powder to said electrostatic spray guns; wherein said draft tube includes at least one in-line filter for trapping impurities and clumps of powder material sucked through said draft tube.

6.    In an electrostatic powder spray apparatus having means to provide a fluidised bed of powder, means to draw powder from said fluidised bed, means to direct said powder to one or more spray guns wherein the improvement comprises: a draft tube adapted to extend into said fluidised bed, said tube including a main body section and an extension section, said main body section including a fine filter means and further adapted to connect to said means to draw said powder from said fluidised bed, said extension including a coarse filter means and being adapted to extend into said fluidised bed.

0137732

FIGURE 1

FIGURE 2